# EUROPÄISCHE PATENTSCHRIFT

(11) **EP 1 227 454 B1**
(45) Veröffentlichungstag und Bekanntmachung des Hinweises auf die Patenterteilung: **27.11.2002**
(21) Anmeldenummer: 01101955.1
(22) Anmeldetag: 29.01.2001
(51) Int. Cl.: G09B 7/02, G09B 7/06

(54) **Verfahren zur Zusammenstellung eines Testes mit Hilfe einer Datenverarbeitungsanlage**
Method of composing a test with the help of a data processing apparatus
Composition d'un test à l'aide d'un dispositif de traitement de données

(43) Veröffentlichungstag der Anmeldung: 31.07.2002
(73) Patentinhaber: GECO Aktiengesellschaft, 21077 Hamburg (DE)
(72) Erfinder: Hilger, Günter, 21220 Seevetal (DE)
(74) Vertreter: Richter, Werdermann & Gerbaulet

(56) Entgegenhaltungen:
- WO-A-98/43221
- FR-A- 2 775 820
- US-A- 5 195 033
- US-A- 5 885 087
- US-A- 6 112 049

## Beschreibung

Die Erfindung betrifft ein Verfahren zur Zusammenstellung eines aus Testfragen bestehenden Testes für einen menschlichen Probanden nach dem Oberbegriff des Anspruchs 1, wie es aus der WO98/43221 A bekannt ist.

Femer betrifft die Erfindung eine Datenverarbeitungsanlage mit mindestens einer Eingabeeinrichtung, mindestens einer Ausgabeeinrichtung und einem Speicher, die zur Durchführung des Verfahrens geeignet ist.

Es ist bekannt, eine Einschätzung für die fachliche und/oder persönliche Qualifikation von Bewerbern für eine bestimmte Aufgabenstellung oder einen Arbeitsplatz mit Hilfe eines Testes zu ermitteln. Dabei wird den Probanden häufig eine vorgegebene Menge von Testfragen vorgelegt, welche sie in einem bestimmten Zeitintervall schriftlich oder mündlich zu beantworten haben. Der Vergleich der gegebenen Antworten mit den korrekten Lösungen beziehungsweise mit vorgegebenen Bewertungskriterien erlaubt es dann, eine Beurteilung der fachlichen beziehungsweise persönlichen Qualifikation abzugeben.

Aus Zeit- und Kostengründen ist man bestrebt, den Umfang der durchgeführten Tests möglichst klein zu halten, ohne dass hierunter jedoch die Aussagefähigkeit des Testes leiden soll. Bisher bekannte Testverfahren erfüllen diese Bedingung allerdings nur unzureichend. Entweder sind die zur Verfügung stehenden Testfragen zu allgemein und zu wenig auf die gewünschte Qualifikation der Probanden zugeschnitten, oder sie sind hinsichtlich ihrer Anzahl zu umfangreich und zu sehr durch nicht relevante Fragen belastet. So gibt es zum Beispiel bei Personalentscheidungen im Bereich der Informationstechnologie (IT) ein breites Spektrum von technischen Spezialgebieten wie zum Beispiel verschiedene Computersysteme, Betriebssysteme oder Anwendungsprogramme. Es kommt daher sehr darauf an, die Fähigkeiten eines Probanden genau in dem für ihn vorgesehenen Spezialgebiet im Test zu erfassen. Vorhandene IT-Standardtests sind indes nicht ausreichend spezifisch, um die gewünschten Aussagen zu liefern. In der Regel werden daher Probanden in einem persönlichen Gespräch mit Fachleuten aus der für sie vorgesehenen Arbeitsabteilung getestet, was jedoch sehr zeitaufwendig ist und zu Lasten der Arbeitsleistung der genannten Fachleute in ihrem primären Aufgabengebiet geht.

Vor diesem Hintergrund war es Aufgabe der vorliegenden Erfindung, ein Verfahren und ein System bereitzustellen, mit welchen Probanden effizient und aussagekräftig getestet werden können, wobei insbesondere fachliche und/oder persönliche Qualifikationen im Personalbereich der Informationstechnologie erfasst werden sollen.

Diese Aufgabe wird durch ein Verfahren mit den Merkmalen des Anspruchs 1 und eine Datenverarbeitungsanlage mit den Merkmalen des Anspruchs 5 gelöst. Vorteilhafte Ausgestaltungen sind in den Unteransprüchen enthalten.

Mit dem Verfahren ist es demnach möglich, einen aus Testfragen bestehenden Test für einen menschlichen Probanden zusammenzustellen. Dabei wird zunächst eine Datenbank mit Testfragen im Speicher einer Datenverarbeitungsanlage abgespeichert, dann werden auf eine Anforderung hin Testfragen aus dieser Datenbank durch die Datenverarbeitungsanlage automatisch ausgewählt, und schließlich werden die so ausgewählten Testfrägen über eine Ausgabeeinrichtung zwecks Beantwortung durch den Probanden ausgegeben.

Bei dem Verfahren wird demnach zunächst eine Datenbank mit einer Ansammlung möglicher Testfragen erstellt. Auf diese Datenbank kann immer wieder zugegriffen werden, und sie kann durch ständige Pflege stets auf dem neuesten Stand gehalten werden. Femer kann die Datenbank auch von darauf spezialisierten Unternehmen erzeugt und unterhalten werden, während die Nutzung durch viele verschiedene Anwender erfolgt. Wenn dann ein Test mit einem Probanden, der für eine bestimmte Aufgabenstellung vorgesehen ist, durchgeführt werden soll, kann auf den in der Datenbank abgelegten Fundus an Testfragen zugegriffen werden. Dabei werden jedoch nicht alle Testfragen dem Probanden vorgelegt, sondern es erfolgt vielmehr mit Hilfe der Datenverarbeitungsanlage eine Auswahl von Testfragen. Für das hierbei eingesetzte Auswahlverfahren gibt es verschiedene Möglichkeiten, welche teilweise Gegenstand der Unteransprüche sind. Die Auswahl hat den Vorteil, dass jeder Proband eine individuell zugeschnittene Menge an Testfragen erhalten kann, wobei sich die Anzahl der Testfragen auf ein akzeptables Maß begrenzt. Durch den Einsatz einer Datenverarbeitungsanlage zur Auswahl der Testfragen wird dabei eine hohe Geschwindigkeit bei der Zusammenstellung des Testes erreicht, und es wird keine Arbeitskapazität von Fachleuten verbraucht. Ein Kerngedanke der Erfindung ist es ein Verfahren zur Anwendung im Internet zur Verfügung zu stellen, bei dem eine große Anzahl von Fragenpools mit einer entsprechend großen Anzahl von Fragen verteilt auf beispielsweise 3 Schwierigkeitsgrade online zur Verfügung zu stellen und beispielsweise Probanden von Personaldienstleistern oder eigenen Mitarbeitern im Multiple-Choice-Verfahren online projektbezogen zu testen. Mit so genannten Templates wird es dem Tester möglich, für ein Projekt bis zu 5 verschieden Hardskills, also Fachgebiete auszuwählen und die dafür benötigte Test-Voreinstellung zu wählen bzw. online einzutragen.

Gemäß einer bevorzugten Ausgestaltung des Verfahrens sind die in der Datenbank abgespeicherten Testfragen verschiedenen Themengebieten und/oder Schwierigkeitsgraden zugeordnet. Eine solche Zuordnung schließt im Sinne der Fuzzy-Logic die Möglichkeit ein, dass jeder Kombination einer Testfrage und eines Themengebietes / Schwierigkeitsgrades ein zwischen 1 und 3 liegender Zugehörigkeitswert zugeordnet wird, welcher angibt, in welchem Ausmaß die Testfrage dem Themengebiet/Schwierigkeitsgrad zuzuordnen ist. Wenn dann über eine Eingabeeinrichtung der Datenverarbeitungsanlage für einen bestimmten Probanden eine Auswahl und/oder eine Gewichtung von zu testenden Themengebieten / Schwierigkeitsgraden vorgegeben wird, kann die Auswahl der Testfragen aus der Datenbank so vorgenommen werden, dass die zu diesen Testfragen gehörenden Themengebiete / Schwierigkeitsgrade der eingegebenen Auswahl und/oder Gewichtung entsprechen. Wenn zum Beispiel eingegeben wurde, dass Themengebiet A ein Gewicht von 80% hat, Themengebiet B ein Gewicht von 20% hat und Themengebiet C nicht von Interesse ist, so können dementsprechend überwiegend Fragen, die dem Themengebiet A zugehören, ausgewählt werden, während Fragen des Themengebietes B weniger häufig und Fragen des Themengebietes C überhaupt nicht ausgewählt werden. Auf diese Weise ist es möglich, für jede zu besetzende Position in einem Unternehmen einen sehr genau hierauf zugeschnittenen Bewerbertest zusammenzustellen, ohne dass hierfür wertvolle Arbeitszeit von Fachleuten des entsprechenden Gebietes gebraucht würde. Die damit erzielbare Vereinfachung der Testerzeugung und die hohe Spezialisierung des Testes macht es auch möglich, dass Unternehmen aus ihrem eigenen Personalbestand diejenigen Mitarbeiter ermitteln können, welche optimal für ein neues durchzuführendes Projekt geeignet sind.

Die Auswahl zwischen mehreren zur Verfügung stehenden gleichwertigen Testfragen gleichen Typs erfolgt vorzugsweise randomisiert, das heisst, nach dem Zufallsprinzip. Testfragen gleichen Typs sind solche, die sich hinsichtlich eines vorgegebenen Kriteriums wie etwa ihres Schwierigkeitsgrades oder ihrer Zuordnung zu einem Themengebiet nicht oder nur geringfügig unterscheiden. Derartige Fragen sind somit innerhalb einer bestimmten Testzusammenstellung gegeneinander austauschbar. Durch eine randomisierte Auswahl dieser Fragen wird erreicht, dass jeder Test selbst dann anders aussieht, wenn ein identisches oder ähnliches Probandenprofil erwartet wird. Die Testergebnisse sind daher auch bei wiederholter Ausführung eines Testes durch einen Probanden nach wie vor aussagekräftig und nicht durch Lerneffekte verfälscht. Ferner ist es auch möglich, mehrere Probanden zugleich und im selben Raum zu testen, da Täuschungsmanöver aufgrund der unterschiedlichen Fragen für jeden Bewerber auszuschließen sind.

Bei den Testfragen kann es sich insbesondere um Wissensfragen aus dem Bereich der Informationstechnologie handeln, welche verschiedenen fachlichen Themengebieten zugeordnet sind. Gerade der Bereich der Informationstechnologie eignet sich besonders für das erfindungsgemäße Verfahren, da dort ein breites Spektrum verschiedener Techniken besteht, welche sich gut durch Wissensfragen charakterisieren lassen. Andererseits ist auch gerade im Bereich der Informationstechnologie der Bedarf für aussagekräftige Tests besonders hoch, da von einzustellenden Mitarbeitern je nach Aufgabenstellung ein sehr spezielles Kenntnisprofil gefordert wird.

Weiterhin können die Testfragen zumindest zum Teil verschiedenen psychologischen Modellgruppen zugeordnet sein. Mit Hilfe solcher Testfragen lässt sich erfassen, inwieweit ein Proband nach seinen persönlichen Merkmalen für bestimmte Einsatzgebiete geeignet ist. So können zum Beispiel die Fähigkeiten eines Probanden zur Kommunikation und zur Wissensvermittlung festgestellt werden, um Arbeitsstellen mit Kundenkontakt oder im Bereich der Lehre richtig zu besetzen. Weiterhin lassen sich mit den Testfragen und deren Auswertung verdeckte Kompetenzen des Probanden feststellen, die möglicherweise einen neuen Einsatzbereich des Probanden (z.B. Manager, Vertriebsbeauftragter) ermöglichen.

Gemäß einer Weiterbildung des Verfahrens wird nach der Auswahl der Testfragen durch die Datenverarbeitungsanlage dem Probanden über die Ausgabeeinrichtung der Datenverarbeitungsanlage ein Identifikationscode mitgeteilt, unter welchem der Proband die für ihn bestimmte Auswahl an Testfragen abrufen kann. Der Proband kann es demnach zumindest in einem gewissen Umfang selbst bestimmen, wann er sich dem Test unterziehen möchte. Über den Identifikationscode ist dabei sichergestellt, dass die Fragen nur vom Berechtigten und nur einmal abgerufen werden können.

Weiterhin wird das Verfahren vorzugsweise so fortgebildet, dass der Proband seine Antworten über eine Eingabeeinrichtung eingibt und die Antworten dann zusammen mit dem Zeitpunkt ihrer Abgabe von der Datenverarbeitungsanlage gespeichert werden. Die Antworten können somit später automatisch ausgewertet werden, und es kann nachgehalten werden, wieviel Zeit der Proband zur Beantwortung benötigt hat. Insbesondere kann sichergestellt werden, dass der Proband seit Ausgabe der Fragen einen ihm zu Verfügung gestellten Zeitrahmen von zum Beispiel einer Stunde nicht überschreitet. Nach Ablauf dieses Zeitrahmens eingehende Antworten werden in der Auswertung dann in der Regel nicht mehr berücksichtigt. Ferner ist es möglich, dass der Proband seine Fragen einzeln abruft und beantwortet, wobei jeweils die Zeit zwischen Ausgabe der Frage und Eingang der Antwort gemessen wird.

Eine automatische Auswertung der Antworten des Probanden ist insbesondere dann möglich, wenn die Testfragen und die zugehörigen Antworten in einem sogenannten Multiple-Choice-Verfahren formuliert werden, das heißt, wenn es zu jeder Frage eine begrenzte Anzahl von vorgegebenen Antworten gibt, aus denen der Proband die richtige(n) auswählen muss. In diesem Falle können die korrekten Lösungen in einer für die automatische Datenverarbeitung geeigneten Form im Speicher der Datenverarbeitungsanlage als Lösungsvorlage hinterlegt werden, so dass die Datenverarbeitungsanlage automatisch jeder Antwort zu jeder Frage entsprechende Bewertungspunkte zuordnen kann.

Durch verschiedene Gewichtungen und (Levels) Schwierigkeitsgrade (1 bis 3) der Fragen können somit Profile zusammengestellt werden, die verschiedene Aspekte im Test in den Vordergrund stellen. Insbesondere ist es auf diese Weise möglich, im Test ergänzend auch Sachgebiete zu erfassen, welche für den vorgesehenen Aufgabenbereich eines Stellenbewerbers eine geringere Bedeutung haben, da diese bei der Beurteilung des Testes schwächer gewertet werden können.

Die Erfindung betrifft weiterhin eine Datenverarbeitungsanlage enthaltend mindestens eine Eingabeeinrichtung, mindestens eine Ausgabeeinrichtung und einen Speicher. Die Datenverarbeitungsanlage ist dadurch gekennzeichnet, dass im Speicher eine Datenbank mit Testfragen für einen menschlichen Probanden gespeichert ist, und dass die Datenverarbeitungsanlage so eingerichtet beziehungsweise programmiert ist, dass sie auf Aufforderung, zum Beispiel auf einen über eine Tastatur eingegebenen Befehl hin, eine Auswahl an Testfragen aus der Datenbank zusammenstellt und diese Auswahl über eine Ausgabeeinrichtung ausgibt.

Diese Datenverarbeitungsanlage ist somit in der Lage, ein Verfahren der oben erläuterten Art auszuführen. Dementsprechend können mit der Anlage die bereits geschilderten Vorteile erzielt werden. Insbesondere können für Probanden individuell Tests zusammengestellt werden, welche trotz eines begrenzten Umfanges eine hohe Aussagekraft für die zugrundeliegende Fragestellung aufweisen. Die Datenverarbeitungsanlage ist vorzugsweise so eingerichtet, dass sie die oben erläuterten Weiterbildungen des Verfahrens implementiert.

Weiterhin ist vorzugsweise mindestens eine Eingabeeinrichtung der Datenverarbeitungsanlage über eine Datenfernübertragung mit der Datenverarbeitungsanlage verbunden. Insbesondere kann die Verbindung über das Internet erfolgen, welches eine besonders große Flexibilität bei der Benutzung der Datenverarbeitungsanlage erlaubt. So können zum Beispiel zahlreiche verschiedene Unternehmen von ihren Internetzugängen aus über dort vorhandene Eingabeeinrichtungen auf die Datenverarbeitungsanlage zugreifen, und zwar sowohl um die Zusammenstellung von Testfragen zu initiieren als auch um im Rahmen der Durchführung eines Testes Antworten an die Datenverarbeitungsanlage zurückzusenden.

In ähnlicher Weise können auch die Ausgabeeinrichtungen über eine Datenfernübertragung mit der Datenverarbeitungsanlage verbunden sein. Auch in diesem Falle findet die Datenfernübertragung vorzugsweise über das Internet statt.

Der Anwendungsbereich und die Vorteile der Erfindung sind nachstehend angegeben:

Größter Abnehmer verfügbarer IT-Experten für IT-Projekte auf den Märkten der Welt sind Systemhäuser, Software- bzw. Hardware-Hersteller und Multimedia-Agenturen. Sie kreieren nachhaltig den Bedarf und bestimmen das Niveau solcher Experten auf den Märkten.

Das Recruiting der Spezialisten ist in verschiedener Hinsicht schwierig:
- Es gibt wenig verfügbare Probanden, weshalb die Nachfrage groß ist
- Es gibt keinen einheitlichen Standard der das Wissen, nachfolgend Hardskill, qualifiziert
- Es gibt einen hohen Anteil von qualifizierten Quereinsteigern ohne Zertifikat
- Vorstellungsgespräche sind teuer und schwierig, da meist anderes Expertenwissen zusätzlich zu den involvierten Personal- oder Recruiting- Abteilungen fehlt und deshalb beigestellt werden muß
- Die Anforderungen an die charakterlichen Eigenschaften sind höher als in anderen Branchen, nachfolgend Softskill
- Die Halbwertzeiten der Hardskills sind extrem kurz
- Rekrutierungsprozesse müssen in der IT-Branche schnell sein
- Der Anteil der Fehleinschätzungen ist hoch

Hier ist es Ziel der Erfindung, die Qualifizierung für Kunden- bzw. Projektsituationen zu ermöglichen, nämlich im Internet eine Side zu erstellen, die sich mit einer tiefen Funktionalität die Standardisierung von IT-Professionals mit verschiedener Testverfahren im Hard- und Softskillbereich, bezogen auf die jeweiligen Testanforderungen der oben beschriebenen Unternehmen, zur Aufgabe macht.

Diese Tests sollen im Web zur Verfügung gestellt werden. Zur Zeit gibt es als Qualitätsstandards im IT-Umfeld nur die Zertifizierungen einschlägiger Soft- oder Hardwarehersteller wie z.B. Microsoft, IBM, Lotus oder SUN etc.. Hierfür müssen aber meistens ein- oder mehrere Schulungsprogramme absolviert werden, an dessen Ende dann meist Zertifizierungen stehen. Beispielsweise "Microsoft Certified System Engineer" - kurz MCSE, oder "Certified Lotus Professional" - kurz CLP etc.. Zum Teil werden auch solche Zertifizierungsverfahren im Web angeboten, diese unterscheiden sich jedoch von IT-Certified grundlegend.

Der Unterschied solcher, herkömmlicher Verfahren liegt darin, dass projekt- oder bedarfsbezogene Zertifizierungen hier keinen Ansatz finden.

Viel mehr wird von den Herstellern und Anbietern solcher Testszenarien, die ja in fast allen Fällen auch die Hersteller von Hard- bzw. Softwareprodukten sind, wie z.B. SUN, oder Microsoft, ein produktbezogener Standard festgelegt, der aber nicht, wie oben beschrieben, auf die Bedürfnisse des Marktes eingeht.

### Ein Beispiel:

Würde ein Unternehmen für eine bestimmte Projektsituation einen SUN-Supporter suchen, der auch noch andere UNIX-Derivate grundlegend kennen sollte und auch noch Datenbankmanagement wie z.B. Oracle beherrschen muss, so wären nach derzeitiger, gängiger Praxis folgende Zertifizierungen erforderlich:
1. SUN, Kurse "Admin 1" und "Admin 2"
2. HP-Unix, Kurs "Admin 1"
3. AIX, Kurs "Admin 1"
4. Oracle, "Datenbankadministrator 1 und 2"

Vorausgesetzt, ein Proband hat sich solches Wissen in der Praxis angeeignet, würde er sich aus Kosten- und Zeitgründen wohl kaum einer solchen Vielzahl von Zertifizierungen unterwerfen.

Da das beschriebene Unternehmen einen Probanden mit solcher Qualifikation aber benötigt, kann der Nachweis der Qualifikation nur mit sehr teuren, aufwendigen, fachlichen Interviews herausgefunden werden.

Hier ist besonders schwierig, die unterschiedlichen Gewichtungen der Fach-kenntnisse im Gespräch richtig zu erfassen, da Überqualifizierungen unmittelbar mit höheren Einkaufspreisen verbunden sind.

Es gibt derzeit auf den Märkten kein Qualifizierungsverfahren, das zielgerichtet Unternehmens- bzw. Projektsituationen abbilden kann. Dieses Problem wird durch die Erfindung gelöst.

Kernstück der Erfindung ist eine Internetseite, mit hoher Funktionalität, die im wesentlichen aus speziellen Fragenbereichen (z.B. SUN, Oracle, AIX), ca. 100.000 Fragen und ca. 400.000 richtigen und falschen Antworten besteht. Somit ist es möglich, nahezu alle Anforderungen der IT-Wirtschaft abzudecken.

Diese Fragen und Antworten, die auf verschiedenen Datenbanken verteilt sind, können Online im Internet für Probanden bereitgestellt werden, um von diesen im multiple choice-Verrfahren beantwortet werden.

Der Schwerpunkt der Side liegt in der Möglichkeit, verschiedene Zertifizierungsverfahren darstellen zu können.

Zertifizierungsarten für Privatpersonen: Zielgruppe Privatpersonen, die das in der Praxis, oder Ausbildung erworbene Wissen unter Beweis stellen wollen.

Es sind folgende Testmöglichkeiten gegeben:
- *Fachzertifizierung*
   bedeutet nur ein Fachbereich, z.B. SUN-Client, der Test kann je nach Wunsch des Probanden in 3 verschiedenen Schwierigkeitsstufen, durchgeführt wer-den. 1=Grundkenntnisse, 2=Fortgeschritten, 3=Experte
   1 Frage / Minute, 60 Fragen
   Je nach prozentualem, erreichten Ergebnis des Probanden, gilt der Test als bestanden oder nicht.
   Als Testbestätigung wird eine Urkunde und Anstecknadel versendet.
   Die Levels 1,2 oder 3 werden durch Bronze-, Silber-, oder Gold- Zertifizierungen wiedergespiegelt.
   Der Proband gilt dann als "IT-Certified.
   *Testzweck: -* IT-Experten als Quereinsteiger, Informatik-Absolventen oder sonstige Probanden aus IT-Berufen die einen Nachweis über ihre erworbenen Kenntnisse haben wollen.
- Profilzertifizierung
   bedeutet fertige Berufsprofile, von IT-Certified erstellt, die bis zu 5 verschiedene Fachgebiete beinhalten, vergleichbar mit Berufsgruppen. Z.B. "Oracle Datenmodellierer" wäre die Zusammenstellung aus Oracle und einem Modellierungsmodell).
   1 Frage / Minute, 60 Fragen
   Je nach prozentualem, erreichten Ergebnis des Probanden, gilt der Test als bestanden oder nicht.
   Als Testbestätigung wird eine Urkunde und Anstecknadel versendet.
   Es gibt nur ein Testlevel.
   Der Proband gilt dann als "IT-Certified".
   *Testzweck: -* IT-Experten als Quereinsteiger, Informatik-Absolventen oder sonstige Probanden aus IT-Berufen die einen Nachweis über ihre erworbenen Kenntnisse haben wollen.
- *Softskilltest*
   Hier wurden 10 Berufsgruppen der IT-Branche definiert, die, jede für sich, in einem Test auf Eignung des Probanden, bezogen auf die jeweilige Berufsgruppe, online überprüft werden können.
   Psychologische Eigenschaften, die z.B. einen Projektleiter kennzeichnen, wurden standardisiert.
   Ebenso können verdeckte Kompetenzen durch diese Testverfahren aufgezeigt werden.
   Er besteht aus 125 Fragen (nur spontane, emotionale Antworten), die in 30 Minuten zu beantworten sind.
   *Testzweck: -* IT-Experten, die ihre psychologischen Fähigkeiten, z.B. als Bewerber zum Manager / Geschäftsführer unter Beweis stellen wollen.

Es ist erfindungsgemäß vorgesehen, dass die Business-User die Tests zusammenstellen und die Probanden die Tests durchführen. Zertifizierungsarten für Business-User, Zielgruppe: IT-Beratungsunternehmen, IT-Personaldienstleister, alle Unternehmen die IT-Kräfte rekrutieren, Internet-Stellenmärkte, Arbeitsamt, etc. und die größten Systemhäuser, IT-Beratungsunternehmen, Personalberatungen, Großkonzerne, etc.

Testmöglichkeiten:
- *Fachzertifizierung*
   bedeutet nur ein Fachbereich, z.B. SUN-Client, der Proband kann den Test, je nach Wunsch des Business-Users, in 3 verschiedenen Schwierigkeitsstufen, durchführen. 1=Grundkenntnisse, 2=Fortgeschritten, 3=Experte
   1 Frage / Minute, 60 Fragen
   Je nach prozentualem, erreichten Ergebnis des Probanden, gilt der Test als bestanden oder nicht.
   Als Testbestätigung wird eine Urkunde und Anstecknadel an den Probanden versendet.
   Die Levels 1,2 oder 3 werden durch Bronze-, Silber-, oder Gold- Zertifizierungen wiedergespiegelt.
   Der Proband·gilt dann als "IT-Certified.
   *Testzweck:*
      - Unternehmen, die ihre Mitarbeiter global für ein Fachgebiet zum Zweck der Einschätzung testen wollen, vorzugsweise bei Bewerbern.
      - Unternehmen, die das avisierte Lernziel von Fortbildungs-maßnahmen überprüfen wollen, um Schulungsunternehmen vergleichen und werten zu können.
- *Profilzertifizierung*
   bedeutet fertige Berufsprofile, von IT-Certified erstellt, die bis zu 5 verschiedene Fachgebiete beinhalten, vergleichbar mit Berufsgruppen. Z.B. "Oracle Datenmodellierer" wäre die Zusammenstellung aus Oracle und einem Modellierungsmodell).
   1 Frage / Minute, 60 Fragen
   Je nach prozentualem, erreichten Ergebnis des Probanden, gilt der Test als bestanden oder nicht.
   Als Testbestätigung wird eine Urkunde und Anstecknadel versendet. Es gibt nur ein Testlevel.
   Der Proband gilt dann als "IT-Certified.
   1 Frage / Minute, 60 Fragen
   *Testzweck:* -Unternehmen, die ihre Mitarbeiter global für ein bestimmtes Berufsprofil zum Zweck der Einschätzung testen wollen.
- *Projektzertifizierung nur Hardskill*
   bedeutet, dass der Business-User individuelle Projektanforderung in selbst definierten Schlüsseln, nachfolgend Templates, die sich durch ID-Nummern unterscheiden, einstellen kann und der Proband einer individuellen Projektzertifizierung durch Aufruf eines solchen vordefinierten Templates unterworfen wird. Dabei ist die räumliche Distanz des Probanden ohne Bedeutung, da diesem per E-Mail die ID-Nummer des Templates übermittelt und der vom Unternehmen angeforderte Test automatisch durch die Nummer der angegebenen Template von der Software zusammengestellt wird. Das Ergebnis wird dem Auftraggeber mitgeteilt, optional nach Wunsch des Auftraggebers, auch dem Probanden.
   Es können bis zu fünf Fachgebiete in jeweils drei Schwierigkeitsstufen und unterschiedlichen prozentualen Gewichtungen einer Template vom Auftrag-geber zusammengestellt werden. Bei einem SUN / Oracle Spezialisten wäre die Template Zusammenstellung z.B. SUN und Oracle in der jeweils erforderlichen projektbezogenen Schwierigkeitsstufe und der prozentualen Gewichtung des jeweiligen Fachgebietes bezogen auf 60 Gesamtfragen.
   Es wird 1 Frage / Minute bei 60 Fragen, bestehend aus max. 5 Fachgebieten, getestet.
   *Testzweck:*
      - Unternehmen, die ihre Mitarbeiter freiwillig einer Qualitätssicherung für eine bestimmte Projektsituation unterwerfen möchten, um gleichmäßigen Qualitätsstandard anzubieten
      - Unternehmen, von deren Kunden ein Nachweis über die Qualifikation ihrer Mitarbeiter, bezogen auf ein konkretes Projekt, gefordert wird.
- *Template Erstellung:*
   Hier können für jede Situation, z.B. Projektsituationen, bestimmte Testanforderungen in einer Testschablone (Template) erstellt werden. Diese werden abgelegt und können immer wieder für ein wiederkehrendes Testszenario verwendet werden. Unterschiedliche Fragen beim wiederholten Aufruf der Testschablone (Template) sind durch die hohe Anzahl der Fragen in jedem Fall gewährleistet.
   Vergleichbar sind diese Templates mit einem Schlüssel für ein bestimmtes Testverfahren. Eigner dieser Schlüssel sind ausschließlich die Ersteller.
   *Testzweck:*
      - Unternehmen die bei großen Projekten mit erheblichen Mitarbeiterbedarf standardisierte und vergleichbare Qualität anbieten wollen
      - Unternehmen die sich ihr eigenes Qualitätsprofil geben wollen
      - Beratende Unternehmen, die für ihren Kunden Lernziele, die diese deren Mitarbeitern vorgegeben haben, auf Erfüllung hin überprüfen. Ebenso kann die Qualität von Schulungsunternehmen am Erfolg gemessen werden.
   Das IT-Niveau jedes Unternehmens lässt sich messen.
- *Softskilltest*
   Hier wurden 10 Berufsgruppen der IT-Branche von IT-Certified definiert, die, jede für sich, in einem Test auf Eignung des Probanden, bezogen auf die jeweilige Berufsgruppe, online überprüft werden können.
   Psychologische Eigenschaften, die z.B. einen Projektleiter kennzeichnen, wurden standardisiert.
   Ebenso können verdeckte Kompetenzen durch diese Testverfahren aufgezeigt werden.
   Er besteht aus 125 Fragen (nur spontane, emotionale Antworten), die in 30 Minuten zu beantworten sind.
   *Testzweck:*
      - Unternehmen, die bei ihren Mitarbeitern verdeckte Kompetenzen erkennen wollen, um diese gezielt zu fördern
      - Unternehmen, die ihren Kunden gegenüber die "Softskill-Qualitäten" ihres Probanden unter Beweis stellen wollen.
      - Unternehmen die sich vor unliebsamen Softskilleigenschaften ihrer Bewerber schützen wollen

Ein wesentlicher erfindungsgemäßer Vorteil besteht darin, dass die Recruitingkosten dramatisch gesenkt werden können.

Ein Systemhaus besteht bundesweit z.Zt. z. B. aus 10 Geschäftsstellen. Jede verfügt über ein eigenes Ressourcenmanagement mit ca. 2-3 Mitarbeitern.

Monatlich werden pro Geschäftsstelle ca. 50 Probanden (intern und extern) einer Bewertung unterzogen. Der Anteil von nicht bestandenen, also umsonst geführten Gesprächen liegt bei ca. 50%. Bedeutet, dass ca. 25 Gespräche von durchschnittlich 2 Ressourcen, nämlich einem Personalbeauftragten und einem fachlichen Berater, geführt werden.

Pro Gespräch werden ca. 1,5 Stunden angesetzt.

Das bedeutet, dass monatlich mind. 75 Mannstunden, a ca. 100,- Euro eingespart werden könnten. Multipliziert man diese 75 Mannstunden mit den 10 Geschäfts-stellen, so wird ein Einsparungspotenzial von ca. 750 Mannstunden, also 900.000,- Euro pro Jahr errechnet.

Die Anzahl der Personalbeauftragten kann insgesamt reduziert werden, wobei die Qualität gesteigert wird. Reputationsgewinne bleiben unberücksichtigt.

Ebenso wird durch IT-Certified Zeitaufwand und Prüfung von Bewerberunterlagen mit der damit verbundenen Auswahl des Probanden drastisch reduziert.

Im Folgenden wird die Erfindung mit Hilfe der Figuren beispielhaft erläutert. Es zeigt:
- Fig. 1: schematisch eine Datenverarbeitungsanlage gemäß der vorliegenden Erfindung;
- Fig. 2: ein Flussdiagramm zur Durchführung des erfindungsgemäßen Verfahrens.

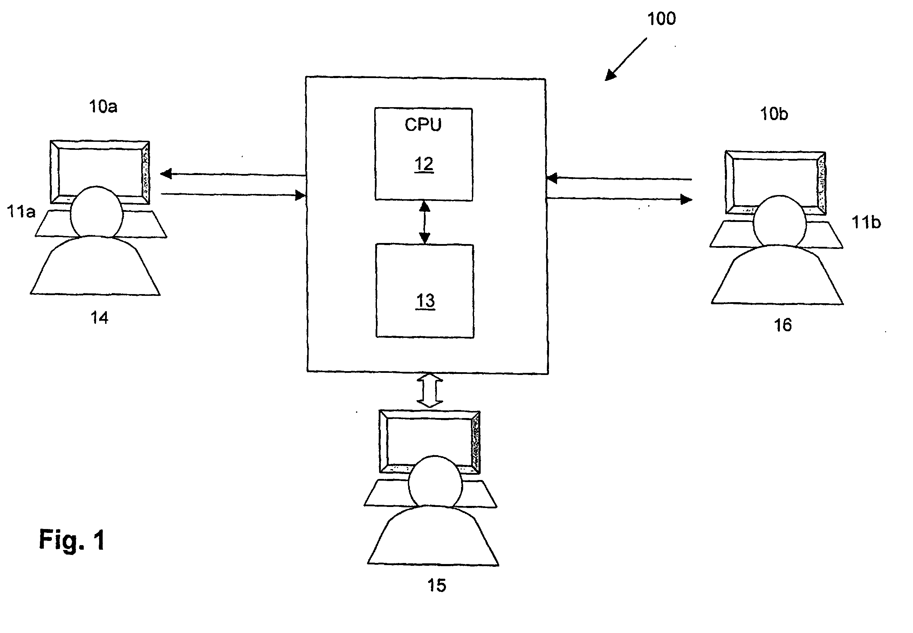

In Figur 1 sind die Elemente einer Datenverarbeitungsanlage 100 dargestellt, welche zur Durchführung des erfindungsgemäßen Verfahrens benötigt werden. Die Datenverarbeitungsanlage besteht im Wesentlichen aus einer zentralen Recheneinheit mit einem Zentralprozessor (CPU) 12 und einem Speicher 13 (Festplatte, Magnetband, CD, RAM etc.), auf den der Zentralprozessor zugreifen kann. Über Datenfernverbindungen wie insbesondere eine Internetverbindung ist die zentrale Recheneinheit der Datenverarbeitungsanlage mit Eingabeeinrichtungen wie insbesondere Tastaturen 11a, 11b sowie mit entsprechenden Ausgabeeinrichtungen wie insbesondere Monitoren 10a, 10b verbunden beziehungsweise bei Bedarf verbindbar. Weiterhin kann am Ort der zentralen Recheneinheit ebenfalls eine Ein- und Ausgabe vorhanden sein, über welche Administratoren 15 den Betrieb der Anlage überwachen können.

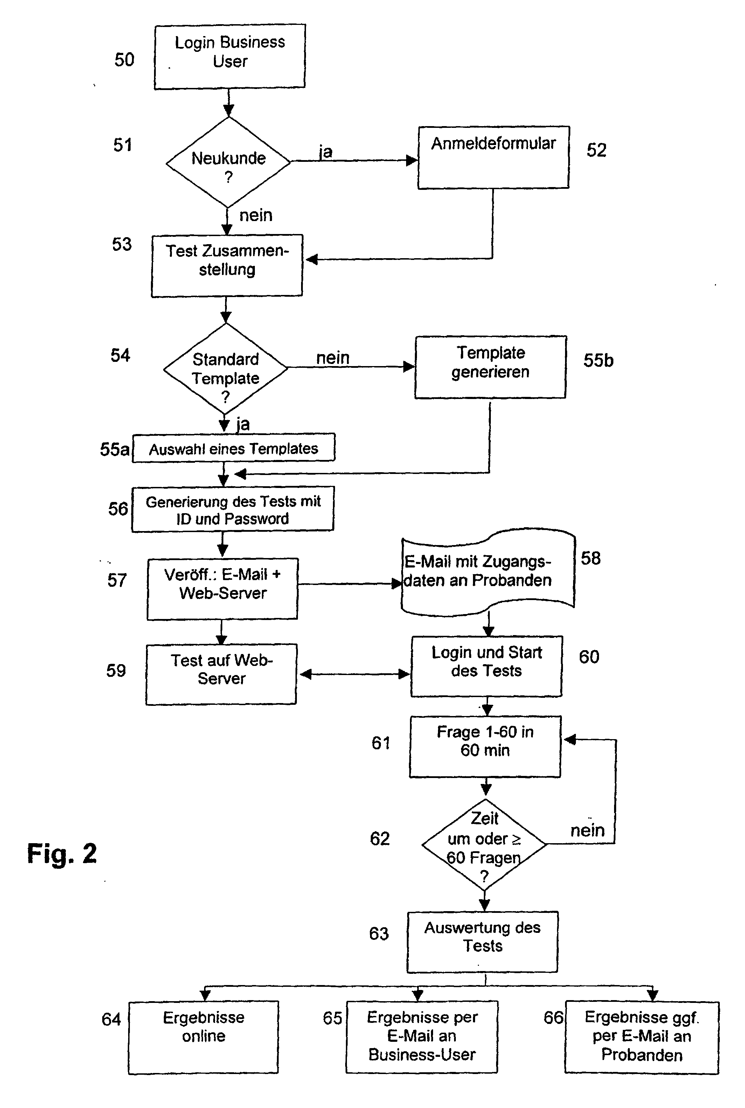

Mit Hilfe der Datenverarbeitungsanlage 100 kann automatisiert ein individuell auf einen Probanden 16 zugeschnittener Test durchgeführt werden, welcher im Flussdiagramm von Figur 2 am Beispiel eines Eignungstests für IT-Fachkräfte erläutert wird.

Der Test kann zum Beispiel zur auf ein Fachgebiet ausgerichteten Fachzertifizierung durchgeführt werden, durch welche hauptsächlich natürliche Personen beziehungsweise IT-Fachkräfte einen Nachweis für ihre Fähigkeiten auf bestimmten Fachgebieten erlangen. Auch kann der Test z.B. zur auf ein bestimmtes Projekt ausgerichteten Projektzertifizierung oder zur auf ein bestimmtes Anforderungsprofil gerichtete Profilzertifizierung durchgeführt werden. Als Nachweis für einen bestandenen Test kann insbesondere ein gedrucktes Zertifikat oder dergleichen ausgegeben werden. Darüber hinaus können die Tests auch von Unternehmen in Form von individuell zusammengestellten Tests oder vordefinierten Standardtests durchgeführt werden, um für bestimmte IT-Berufsgruppen Projektzertifizierungen durchführen zu lassen, um die Befähigung für bestimmte Aufgabengebiete festzustellen.

Beide Arten von Tests werden durch eine Zusammenstellung von Fragen mit einer Anzahl von typischerweise 60 Stück gebildet. Bei den Projektzertifizierungen entstammen die Fragen dabei mehreren Fachgebieten, zum Beispiel fünf verschiedenen, wohingegen bei der Fachzertifizierung die Fragen nur einem oder nur wenigen Fachgebieten entstammen. Die Ergebnisse eines Tests werden dem Auftraggeber 14 des Tests sowie optional auch dem Probanden 16 zur Verfügung gestellt. Die Tests eignen sich für Unternehmen zur Bewerberselektion sowie zur Feststellung der Eignung von Personen für geplante Projekte, in denen bestimmte Fähigkeiten gefordert sind.

Die Benutzung des erfindungsgemäßen Testsystems beginnt mit dem Login eines geschäftlichen Kunden 14 über eine Datenfernübertragungsleitung (vgl. Block 50 in Figur 2). Entsprechend Block 51 wird von der Datenverarbeitungsanlage 100 sodann abgefragt beziehungsweise entschieden, ob der Benutzer ein Neukunde ist oder nicht. Ist er ein Neukunde, so verzweigt das Programm zunächst zu Block 52, gemäß dem ein Anmeldeformular durch den Neukunden auszufüllen ist. Ist der Kunde dagegen ein bereits registrierter Kunde, so geht das Verfahren unmittelbar zu Block 53 weiter, um einen Test zusammenzustellen, der mit einem Probanden 16 auszuführen ist. In Block 53 wählt der Kunde insbesondere die Themenbereiche aus, auf welche sich der durchzuführende Test beziehen soll. Dabei·kann der Kunde auch die Themenbereiche mit verschiedenen Gewichtungen vorgeben, zum Beispiel 60% "Grundlagen der Netzwerk-Technologie" und 40% "Linux 4".

Dann entscheidet der Kunde gemäß Block 54, ob er einen Standardtest durchführen möchte oder nicht. Wenn er dies möchte, kann er in Block 55a einen in der Datenverarbeitungsanlage vorhandenen Standardtest aufrufen. Bei Benutzung des Standardtests greift der Kunde 14 auf eine im Speicher 13 der Datenverarbeitungsanlage 100 abgespeicherte Datenbank mit Testfragen zurück. Die Testfragen sind dabei über die Administratoren 15 der Datenverarbeitungsanlage 100 gesammelt und in der Datenbank zusammengestellt worden.

Entscheidet sich der Kunde dagegen in Block 54 dafür, keinen Standardtest zu verwenden, so kann er in Block 55b einen eigenen Test generieren. Dabei kann der Kunde 14 insbesondere einen eigenen Satz von vorbereiteten Testfragen im Speicher 13 der Datenverarbeitungsanlage 100 hinterlegen.

Nach Auswahl der Themenbereiche und eventueller Ergänzung der Testfragen in Block 55b werden die Fragen des Testes von der Datenverarbeitungsanlage nach einem Randomverfahren zusammengestellt, und der individuelle Test wird zusammen mit Zugangsdaten für die zu testende Person 16 generiert (Block 56).

Nach Erzeugung des individuellen Testes wird dieser in Block 57 auf einem Web-Server abgelegt, und das Vorhandensein des Testes sowie die Zugangsdaten werden über E-Mail in Block 58 an einen Probanden 16 übermittelt. Dieser kann dann gemäß Block 60 sich zu einem vorgegebenen oder von ihm selbst zu bestimmenden Zeitpunkt auf dem Web-Server einloggen und dort gemäß Block 59 interaktiv den Test absolvieren. Dabei kann zum Beispiel eine Zeit von 60 Minuten zur Beantwortung von insgesamt 60 Fragen bereitstehen. Die Abarbeitung der Fragen unter Beobachtung der verbrauchten Zeit ist in der Schleife 61 und 62 dargestellt. Die Präsentation der Testfragen auf der Ausgabeeinrichtung 10b beim Probanden 16 kann gemäß den Vorgaben des Benutzers 14 gestaltet sein, das heißt mit dessen "Corporate Design".

Nach Beendigung des Testes findet in Block 63 die Auswertung statt, wobei die Ergebnisse des Testes gemäß Block 64 online zur Verfügung gestellt werden können, gemäß Block 65 per E-Mail an den Auftraggeber 14 gesandt werden können und/oder gemäß Block 66 per E-Mail an den Probanden 16 übermittelt werden können.

Nachfolgend wird das Verfahren anhand eines konkreten Beispiels detaillierter erläutert. Wenn in einem Unternehmen Bedarf für eine Fachkraft im IT-Bereich besteht, wendet sich in der Regel ein zuständiger Nachfrager an einen Ressourcenmanager mit der Bitte, den gewünschten Spezialisten der IT-Branche bereitzustellen. Dabei kann es sich um eine firmeninterne Nachfrage handeln oder auch um die Beschaffung externer Kräfte. Üblicherweise stellt der Ressourcenmanager daraufhin verschiedene Personen mit verschiedenen Stundensätzen zur Auswahl, wobei sich die Eignung dieser Personen für die vorgesehene Aufgabe nicht sicher prüfen lässt, da nur allgemeine Zertifizierungen vorhanden sind. Das Unternehmen muss seine Auswahl aus den Bewerbern somit auf der Basis unvollständiger Informationen treffen oder aber aufwendige Auswahlgespräche führen, an denen insbesondere Fachkräfte aus dem betroffenen Bereich teilnehmen müssen. Es liegt auf der Hand, dass hierdurch wertvolle Arbeitszeit in dem personell ohnehin unterbesetzten Fachbereich verloren geht.

Durch das erfindungsgemäße Verfahren lässt sich dagegen in zeit- und kostengünstiger Weise eine gezielte aufgabenspezifische Zertifizierung von Bewerbern für eine Stelle durchführen.

Das Anforderungsprofil für ein gegebenes IT-Projekt kann zum Beispiel so gestaltet sein, dass ein Fachmann gesucht wird, der sich im Bereich SUN, ORACLE und TIVOLI auskennt. Dabei sei es notwendig, dass er bezüglich TIVOLI Grundkenntnisse, in Bezug auf ORACLE fortgeschrittene Kenntnisse und in Bezug auf SUN Expertenkenntnisse mitbringt.

Durch verschiedene Levels (Schwierigkeitsgerade 1 bis 3) kann das Niveau der Fragen entsprechend bestimmt werden.

Darüber hinaus können die Anforderungsfaktoren gewichtet werden, zum Beispiel mit folgenden Gewichtungsfaktoren: SUN 30%, ORACLE 60% und TIVOLI 10%.

Unter den genannten Vorgaben wird dann erfindungsgemäß ein sogenanntes Template konzipiert. Dies bedeutet, dass ein Fragenkatalog entwickelt wird, der die Eignungen eines Probanden 16 in Bezug auf SUN, ORACLE und TIVOLI unter Berücksichtigung des geforderten Kenntnisgrades und der Gewichtung abfragt. Dieses Template wird mit einer ID-Nummer versehen und über das Internet abrufbar hinterlegt. Ein Proband 16, der sich für das Projekt zertifizieren will, kann sich dann über die vorgegebene ID-Nummer dem Test in der oben geschilderten Weise unterziehen. Auf diese Weise erhält der Nachfrager 14 als Ergebnis eine gezielt auf die Aufgabenstellung zugeschnittene Bewertung des Bewerbers 16.

Diesem sogenannten Hartskill-Test kann noch ein Softskill-Test hinsichtlich der Persönlichkeit des Probanden zugeordnet werden. Dieser Test benötigt einen speziellen Softskill-Zertifizierungs-Fragenkatalog, bei dem ebenfalls bestimmte Gewichtungen vorgegeben werden können. So können beispielsweise Teamfähigkeit, hohe Belastbarkeit, Einsatzfreude oder besondere Kreativität gefragt sein. Die technische Anwendung des Softskill-Tests entspricht dem Hartskill-Test, während die Gestaltung und die Lösung sich im wesentlichen unterscheiden. Bei der Gestaltung des Tests entfällt eine vorgebbare Gewichtung denn es muss aus einer vorgegebenen Anzahl von Profilvorgaben bzw. Berufsgruppen eine entsprechende Auswahl getroffen werden und bei der Durchführung des Tests muss seitens des Probanden eine entsprechende Einordnung durchgeführt werden.

Die im Speicher 13 der Datenverarbeitungsanlage 100 gespeicherte Datenbank mit Fragen enthält typischerweise ca. 100 000 Fragen aus ca. 190 Themenbereichen, welche jeweils verteilt auf drei Schwierigkeitsgrade sind. Zu den Fragen gehören Antworten im Multiple-Choice-Verfahren. Der Schwierigkeitsgrad wird in drei Stufen von 1-3 eingetragen, wobei 1 = Anfänger, 2 = Fortgeschrittener, 3 = Experte ist. Weiterhin kann vorgegeben werden, welche Betätigungsform für die zu besetzende Stelle vorliegt. Hierbei sind in einem Softskill-Test zum Beispiel die Betätigungsformen Berater, Entwickler, Management Geschäftsführung, Supporter /User Help Desk (UHD), Systemmanager / Administrator / Systemingenieur, Teamleiter / Projektleiter / Techniker / Trainer und Vertriebsleiter entwickelt worden. Aufgrund von in psychologischen Tests entwickelten Persönlichkeitsprofilen sind für den Softskill-Bereich Fragen erzeugt worden, die je nach prozentualem Ergebnis der Antworten ein Bild von der Persönlichkeit des Probanden geben. Der Softskill-Test ergänzt das Bild eines Bewerbers in Bezug auf seine Fähigkeit beispielsweise ein Team zu führen, zu unterrichten oder in einem Team mitzuarbeiten.

Besonders wichtig ist die Tatsache, dass grundsätzlich sämtliche Tests neu zusammengestellt werden und jeder Test für jeden Teilnehmer eine individuelle Qualitätssicherung darstellt. Hierdurch eignet er sich auch hervorragend für Abschlussprüfungen von Fortbildungsmaßnahmen, da hier ein Abschreiben durch die Getesteten quasi nicht möglich ist.

## Patentansprüche

1. Verfahren zur Zusammenstellung eines Tests für einen menschlichen Probanden (16), wobei
- eine Datenbank mit Testfragen im Speicher (13) einer Datenverarbeitungsanlage (100) gespeichert wird,
- auf Anforderung Testfragen aus der Datenbank durch die Datenverarbeitungsanlage ausgewählt werden,
- die ausgewählten Testfragen über eine Ausgabeeinrichtung (10b) zur Beantwortung durch den Probanten ausgegeben werden,
- jede der Testfragen mindestens einem Themengebiet und Schwierigkeitsgrad zugeordnet ist,
- über eine Eingabeeinrichtung (11a) der Datenverarbeitungsanlage (100) eine Auswahl und/oder Gewichtung von zu testenden Themengebieten und Schwierigkeitsgraden vorgegeben wird,
- die Auswahl der Testfragen aus der Datenbank so vorgenommen wird, daß die zugehörigen Themengebiete und Schwierigkeitsgrade der eingegebenen Auswahl und/oder Gewichtung entsprechen,
- die Auswahl zwischen Testfragen gleichen Typs randomisiert erfolgt,
- dem Probanten (16) über eine Ausgabeeinrichtung (10b) ein Identifikationscode mitgeteilt wird, unter welchem der Proband die für ihn bestimmte Auswahl an Testfragen abrufen kann,
- die über eine Eingabeeinrichtung (11b) eingegebenen Antworten eines Probanden (16) zusammen mit dem Zeitpunkt der Antwort gespeichert werden,
**dadurch gekennzeichnet, daß** den in einem Multiple-Choice-Verfahren gegebenen Antworten eines Probanden (16) mit Hilfe einer im Speicher (13) der Datenverarbeitungsanlage (100) abgelegten Lösungsvorlage Bewertungspunkte zugeordnet werden.

2. Verfahren nach Anspruch 1, **dadurch gekennzeichnet, daß** zu den Testfragen Wissensfragen aus dem Bereich der Informationstechnologie gehören, welche jeweils verschiedenen fachlichen Themengebieten zugeordnet sind.

3. Verfahren nach einem der Ansprüche 1 oder 2, **dadurch gekennzeichnet, daß** die Testfragen zumindest teilweise verschiedenen psychologischen Modellgruppen zugeordnet sind.

4. Verfahren nach einem der Ansprüche 1 bis 3, **dadurch gekennzeichnet, daß** die erzielten Bewertungspunkte mit einer vorgegebenen Gewichtung addiert werden, um das Testergebnis bezüglich eines zugehörigen Profils zu ermitteln.

5. Datenverarbeitungsanlage (100) mit mindestens einer Eingabeeinrichtung (11a, 11b), mindestens einer Ausgabeeinrichtung (10a, 10b) und einem Speicher (13), wobei im Speicher eine Datenbank mit Testfragen für einen menschlichen Probanden (16) gespeichert ist, und wobei die Datenverarbeitungsanlage so eingerichtet ist, daß sie gemäß einem Verfahren nach einem der Ansprüche 1 bis 4 auf Anforderung eine Auswahl an Testfragen aus der Datenbank zusammenstellt und über eine Ausgabeeinrichtung 10b) ausgibt.

6. Datenverarbeitungsanlage nach Anspruch 5, **dadurch gekennzeichnet, daß** die Eingabeeinrichtung (11a, 11b) über eine Datenfernübertragung mit der Datenverarbeitungsanlage (100) verbunden ist.

7. Datenverarbeitungsanlage nach einem der Ansprüche 5 oder 6, **dadurch gekennzeichnet, daß** die Ausgabeeinrichtung (10a, 10b) über eine Datenfernübertragung mit der Datenverarbeitungsanlage (100) verbunden ist.

## Claims

1. A method for composing a test for a human test person (16), wherein
- a data bank with test questions is stored in the memory (13) of a data processing installation (100),
- when demanded test questions are selected from the data bank by the data processing installation,
- the selected test questions are outputted via an output means (10b) for answering by the test persons,
- each of the test questions is allocated to at least one topic field and difficulty degree,
- via an input means (11a) of the data processing installation (100) one sets a selection and/or weighting of topic fields and degrees of difficulty,
- the selection of the test questions from the data bank is carried out such that the associated topic fields and degrees of difficulty correspond to the inputted selection and/or weighting,
- the selection between test questions of the same type is effected in a randomised manner
- an identification code is communicated to the test person (16) via an output means (10b), under which the test person may call up the selection of test questions envisaged for him,
- the answers of a test person (16) inputted into the input means (11b) are stored together with the point in time of the answer,
**characterised in that** with the help of a solution pattern stored in the memory (13) of the data processing installation assessment points are allocated to the answers of a test person (16) given in a multiple choice method.

2. A method according to claim 1, **characterised in that** knowledge questions from the field of information technology belong to the test questions, which in each case are allocated to different specialist topic fields.

3. A method according to one of the claims 1 or 2, **characterised in that** the test questions are allocated at least partly to various psychological model groups.

4. A method according to one of the claims 1 to 3, **characterised in that** the achieved assessment points with the predetermined weighting are added in order to determine the test result with respect to an associated profile.

5. A data processing installation (100) with at least one input means (11a, 11b), at least one output means (10a, 10b) and a memory (13), wherein in the memory there is stored a data bank with test questions for a human test person (16), and wherein the data processing installation is set up such that according to a method according to one of the claims 1 to 4 on demand it composes a selection of test questions from the data bank and outputs these via an output means (10b).

6. A data processing installation according to claim 5, **characterised in that** the input means (11a, 11b) is connected to the data processing installation (100) via a data communication.

7. A data processing installation according to one of the claims 5 or 6, **characterised in that** the output means (10a, 10b) is connected to the data processing installation (100) via a data communication.

## Revendications

1. Procédé pour établir un test pour un candidat humain à tester (16),
- une banque de données avec des questions de test étant mise en mémoire dans la mémoire (13) d'une installation de traitement de données (100),
- des questions de test étant sélectionnées sur demande par l'installation de traitement de données à partir de la banque de données,
- les questions de test sélectionnées étant sorties par un dispositif de sortie (10b) pour que le candidat à tester y réponde,
- chacune des questions de test correspondant à au moins un domaine thématique et degré de difficulté,
- une sélection et/ou pondération des domaines thématiques à tester et des degrés de difficulté étant prédéfinie par un dispositif d'entrée (11a) de l'installation de traitement de données (100),
- la sélection des questions de test à partir de la banque de données étant effectuée de telle manière que les domaines thématiques et degrés de difficulté correspondants correspondent à la sélection et/ou à la pondération entrée,
- la sélection entre les questions de test de même type étant effectuée de manière aléatoire,
- un code d'identification étant communiqué au candidat à tester (16) par un dispositif de sortie (10b), code avec lequel le candidat du test peut appeler la sélection de questions de test qui lui est destinée,
- les réponses d'un candidat à tester (16) entrées par un dispositif d'entrée (11b) étant mémorisées ensemble avec le moment de la réponse,
**caractérisé en ce que** des points d'évaluation sont affectés aux réponses d'un candidat à tester (16) données selon un procédé de choix multiple à l'aide d'un modèle de solution mémorisé dans la mémoire (13) de l'installation de traitement de données (100).

2. Procédé selon la revendication 1, **caractérisé en ce que** des questions de savoir du domaine de la technologie de l'information, qui sont affectées à respectivement différents domaines thématiques spécialisés, font partie des questions de test.

3. Procédé selon l'une des revendications 1 ou 2, **caractérisé en ce que** les questions de test sont affectées à des groupes de modèles psychologiques au moins partiellement différents.

4. Procédé selon l'une des revendications 1 à 3, **caractérisé en ce que** les points d'évaluation obtenus avec une pondération prédéfinie sont cumulés pour déterminer le résultat du test pour ce qui est d'un profil correspondant.

5. Installation de traitement de données (100) avec au moins un dispositif d'entrée (11a, 11b), au moins un dispositif de sortie (10a, 10b) et une mémore (13), une banque de données avec des questions de test pour un candidat humain à tester (16) étant mémorisée dans la mémoire et l'installation de traitement de données étant agencée de telle manière qu'elle réunit sur demande, selon un procédé selon l'une des revendications 1 à 4, une sélection de questions de test provenant de la banque de données et la sort par un dispositif de sortie (10b).

6. Installation de traitement de données selon la revendication 5, **caractérisée en ce que** le dispositif d'entrée (11a, 11b) est relié à l'installation de traitement de données (100) par une télétransmission de données.

7. Installation de traitement de données selon l'une des revendications 5 ou 6, **caractérisée en ce que** le dispositif de sortie (10a, 10b) est relié à l'installation de traitement de données (100) par une télétransmission de données.
